**Europäisches Patentamt**

(19) **European Patent Office**

**Office européen des brevets**

(11) Numéro de publication: **0 065 450**
**B1**

(12) # FASCICULE DE BREVET EUROPEEN

(45) Date de publication du fascicule du brevet:
**04.09.85**

(21) Numéro de dépôt: **82400809.8**

(22) Date de dépôt: **04.05.82**

(51) Int. Cl.⁴: **C 09 D 3/727,** B 05 D 7/14,
**B 32 B 15/08**

(54) Métal enduit d'un film polymère et son procédé d'obtention.

(30) Priorité: **12.05.81 FR 8109386**

(43) Date de publication de la demande:
**24.11.82 Bulletin 82/47**

(45) Mention de la délivrance du brevet:
**04.09.85 Bulletin 85/36**

(84) Etats contractants désignés:
**AT BE CH DE GB IT LI LU NL SE** —

(56) Documents cités:
**FR - A - 1 323 379**
**FR - A - 2 401 757**

(73) Titulaire: **Société Chimique des Charbonnages S.A., Tour Aurore Place des Reflets, F-92080 Paris La Défense Cédex 5 (FR)**

(72) Inventeur: **Decroix, Jean-Claude, rue de la Forge aux Fers Saint Nicolas Les Arras, F-62000 Arras (FR)**

(74) Mandataire: **Dorland, Anne-Marie, CDF CHIMIE S.A. Service Propriété Industrielle Tour Aurore Place des Reflets, F-92080 La Defense Cedex 5 (FR)**

EP 0 065 450 B1

## Description

La présente invention concerne l'enduction d'un film polymère sur les métaux.

Dans plusieurs applications on a besoin de réaliser l'enduction d'un film polymère de faible épaisseur sur un métal, ledit métal se présentant sous forme de plaque ou de feuille. Les propriétés du matériau polymère requises pour cette application sont essentiellement d'une part la résistance au pelage et d'autre part la résistance des soudures à chaud. Les matériaux polymères largement utilisés pour leurs bonnes propriétés dans cette application sont des ionomères de l'éthylène, c'est-à-dire des terpolymères d'éthylène, d'acide méthacrylique et de méthacrylate de métal alcalin ou de zinc. D'autre part, le brevet américain 4 032 692 décrit un procédé de revêtement de matériaux par application sur un substrat d'un terpolymère fondu comprenant, pour 100 parties en poids, de 70 à 90 parties d'éthylène, de 0,5 à 10 parties de l'amide d'un acide carboxylique éthyléniquement insaturé et de 0,5 à 20 parties de l'ester d'un acide carboxylique éthyléniquement insaturé.

Le brevet français n° 2 401 757 décrit une dispersion aqueuse ayant des propriétés filmogènes la rendant apte au revêtement de substrats métalliques, comprenant un copolymère partiellement neutralisé contenant de 99 à 75% en mole d'éthylène et de 1 à 25% en mole d'un acide carboxylique insaturé éthyléniquement en α-β dont au moins 10% est neutralisé par les ions métalliques et/ou ammonium. Cet acide peut être par exemple l'acide acrylique, l'acide méthacrylique ou l'acide maléïque. Lorsque cette dispersion est appliquée en revêtement sur un substrat, notamment sur une plaque de métal, il est nécessaire de procéder à une opération de séchage pour obtenir une pellicule sur ledit substrat, ce qui constitue un inconvénient. En outre la résistance au pelage dans le sens transversal, la résistance au pelage dans le sens longitudinal, ainsi que la résistance aux soudures des revêtements de métaux obtenues avec une telle dispersion ne sont pas satisfaisantes.

La présente invention a pour objet de proposer le choix d'un nouveau film polymère pour l'enduction sur les métaux, en vue d'améliorer les propriétés d'application requises, ainsi que les moyens de réaliser l'enduction de ce film nouveau.

Ainsi la présente invention concerne un métal enduit d'une couche de film polymère d'épaisseur comprise entre 10 et 500 µm, ledit film consistant en un terpolymère comprenant 88 à 98,7% en moles de motifs dérivés de l'éthylène, de 1 à 10% en moles de motifs dérivés d'un (méth)acrylate d'alkyle et de 0,3 à 3% en moles de motifs dérivés de l'anhydride maléïque, et ayant un indice de fluidité compris entre 2 et 10 dg/mn. Certains terpolymères utilisables dans le cadre de la présente invention ont été décrits dans le brevet français n° 1 323 379. Ce brevet décrit dans son exemple 9 l'application au collage de papier sur aluminium d'un mélange de 10% en poids dans une cire paraffinique d'un terpolymère comprenant 83,4% d'éthylène, 16% d'acrylate d'éthyle et 0,6% en poids d'anhydride maléïque. Dans la présente invention, qui concerne non pas le collage de papier sur aluminium mais l'enduction d'un film de terpolymère sur des métaux, le terpolymère n'est pas utilisé comme additif à un autre composé, en l'occurence le cire paraffinique, mais comme constituant principal du film.

Des terpolymères particuliers également utilisables, caractérisés notamment par leur indice de polydispersité supérieur à 6 et leur température Vicat comprise entre 30° et 85 °C, ont été décrits dans la demande de brevet français n° 2 498 609 au nom de la demanderesse.

Le procédé de fabrication de ces terpolymères consiste à copolymériser, en présence d'au moins un initiateur de radicaux libres, un mélange composé de 94 à 99% en poids d'éthylène, de 0,7 à 5% en poids d'ester (méth) acrylique et de 0,2 à 0,9% en poids d'anhydride maléïque dans un réacteur maintenu sous une pression de 1000 à 3000 bars et à une température de 170° à 280 °C, à détendre puis à séparer le mélange de monomère et du terpolymère formé dans le réacteur, et enfin à recycler vers le réacteur le mélange d'éthylène et de monomères précédemment séparé, le flux recyclé comprenant de 99 à 99,8% d'éthylène et de 0,2 à 1% d'ester (méth)acrylique.

Facultativement, ledit terpolymère peut comprendre un quatrième monomère copolymérisable avec les trois premiers; celui-ci peut être choisi parmi les α-oléfines ayant de 3 à 8 atomes de carbone, les monomaléates d'alkyle et les maléates de dialkyle dont les groupes alkyle ont de 1 à 6 atomes de carbone, l'acétate de vinyle, le monoxyde de carbone, et peut-être présent à raison de jusqu'à 5% en moles, la proportion de l'éthylène dans le tétrapolymère étant alors diminuée d'autant par rapport à la gamme indiquée ci-dessus.

Le cas échéant le terpolymère utilisé dans le cadre de la présente invention peut être préalablement traité par une quantité molaire, au plus égale à la quantité molaire de motifs dérivés de l'anhydride maléïque, d'un réactif choisi parmi l'ammoniac et les composés ayant une fonction amine primaire ou secondaire.

Des films d'épaisseur comprise entre 10 et 500 µm sont obtenus à partir de ces terpolymères à travers une filière plate de manière connue.

L'invention concerne également un procédé d'obtention d'un métal enduit tel que décrit ci-dessus, consistant à enduire ledit film polymère sur un support métallique à une température comprise entre 140 °C et 300 °C, la vitesse de défilement dudit support métallique étant comprise entre 40 et 400 mètres par minute. Par métal au sens de la présente invention il faut entendre un métal choisi parmi l'aluminium et l'acier. Par support métallique il faut entendre un support sous forme de plaque, de feuille ou de tube et ayant une épaisseur d'au moins 25 µm.

Les métaux enduits selon l'invention ont des propriétés remarquables et améliorées par rapport aux métaux enduits conformément à l'état de la technique exposé ci-dessus. En premier lieu, leur résistance au pelage est au moins équivalente à celle obtenue au moyen d'ionomères de l'éthylène et est mieux équilibrée dans les sens longitudinal et transversal. En second lieu la résistance des soudures est nettement améliorée par rapport aux inomères de l'éthylène, pour des températures de scellage allant de 100 °C jusqu'à plus de 150 °C, et elle reste satisfaisante aux températures de scellage relativement basses qui sont généralement recherchées en vue d'accroître les cadences de production.

Les métaux enduits selon l'invention trouvent des applications variées et de grande diffusion. Ainsi les films d'aluminium enduits selon l'invention peuvent être utilisés dans l'industrie de l'emballage alimentaire pour maintenir les aliments à l'abri de l'humidité et conserver leur arôme. D'autre part le procédé d'enduction selon l'invention appliqué à des tuyaux d'acier, tels que des tuyaux pour le transport de pétrole ou de gaz, permet de protéger ces tuyaux contre l'oxydation et les chocs, le film terpolymère pouvant dans ce cas être recouvert d'une couche de polyéthylène chargé de noir de carbone.

Les exemples suivants ont pour objet d'illustrer l'invention de manière non limitative.

Exemples 1 et 2 – Fabrication de terpolymères.

On considère un réacteur autoclave cyclindrique comprenant trois zones d'un volume de 1 litre chacune et équipé d'un agitateur à palettes. Les zones sont séparées par des écrans à soupape. L'éthylène frais comprimé par un premier compresseur alimente la première zone. La seconde zone est alimentée par un mélange homogène d'éthylène, d'anhydride maléïque (AM) et d'acrylate d'éthyle (AE). Enfin une solution d'éthyl-2-perhexanoate de terbutyle dans une coupe d'hydrocarbures est injectée dans la troisième zone. Celle-ci constitue donc la seule zone réactionnelle puisqu'elle met en présence les trois co-monomères et un initiateur de radicaux libres. On trouvera dans le tableau I ci-après d'une part les proportions en poids d'anhydride maléïque et d'acrylate d'éthyle par rapport à l'éthylène dans la zone réactionnelle et d'autre part la température dans ladite zone. Le réacteur est maintenu sous une pression de 1600 bars. Au fond de la troisième zone du réacteur est placée une vanne de détente permettant d'abaisser la pression à 300 bars. Le mélange du polymère fondu d'une part et des monomères gazeux d'autre part, après avoir traversé la vanne de détente, passe dans une trémie séparatrice. Tandis que le polymère est recueilli au fond de la trémie, les monomères sont acheminés, après passage à travers une trémie de dégraissage, vers un second compresseur. D'autre part une solution d'anhydride maléïque dans l'acrylate d'éthyle est pompée sous pression et acheminée vers l'entrée d'un homogénéiseur de type Venturi où elle est mélangée au flux des monomères recyclés provenant du second compresseur. A la sortie de ce dispositif Venturi, le mélange des trois monomères est acheminé vers un homogénéiseur en spirale puis transféré à la seconde zone du réacteur.

A la sortie de la trémie séparatrice, le terpolymère fabriqué est analysé par spectrophotométrie infrarouge et les proportions en moles de motifs acrylate d'éthyle et de motifs anhydride maléïque sont déterminées et indiquées dans le tableau I ci-après. D'autre part l'indice de fluidité du polymère est déterminé selon la norme ASTM D 1238-73 et exprimé en dg/mn.

Tableau I

| Exemple | T °C | Réacteur | | Polymère | | I.F. |
| | | % AM | % AE | % AM | % AE | |
|---|---|---|---|---|---|---|
| 1 | 185 | 0,35 | 3,0 | 1,0 | 3,3 | 6,4 |
| 2 | 230 | 0,25 | 0,85 | 0,4 | 1,3 | 3,8 |

Exemples 3 (comparatif), 4 et 5 – Enduction d'aluminium

A travers une filière plate on forme un film d'épaisseur 25 µm qu'on enduit à la température de 265 °C (exemple 3 comparatif) ou de 250 °C (exemple 4 selon l'invention) sur une feuille d'aluminium défilant à la vitesse de 40 mètres par minute. Le film de l'exemple 3 est constitué d'un terpolymère comprenant 90% en moles de motifs dérivés de l'éthylène, 3% de motifs dérivés de l'acide méthacrylique et 7% de motifs dérivés du méthacrylate de zinc, commercialisé sous la marque SURLYN. Le film de l'exemple 4 est constitué du terpolymère de l'exemple 1. Sur les feuilles d'aluminium ainsi enduites on mesure:

– la résistance au pelage dans les sens longitudinal (R.P.L.) et transversal (R.P.T.) selon la norme ASTM D 903-49, modifiée en ce qui concerne la largeur de la bande de polymère (35 mm au lieu de 25 mm), et exprimée en grammes.

– la résistance des soudures R.S. selon la norme NF-K03-004, modifiée en ce qui concerne la largeur de la bande de polymère (35 mm au lieu de 15 mm), et exprimée en kilogrammes. Cette résistance peut être mesurée pour des soudures réalisées par électrodes à différentes températures.

Les résultats de ces mesures figurent au tableau II ci-après.

Tableau II

| Exemple | R.P.L. | R.P.T. | R.S. (150 °C) | R.S. (100 °C) |
|---|---|---|---|---|
| 3 | 260 | 460 | 0,3 | 1,8 |
| 4 | 360 | 390 | 0,7 | 2,2 |

Le film de l'exemple 5 est constitué du terpolymère de l'exemple 2. Sur la feuille d'aluminium ainsi enduite, la résistance des soudures effectuées à 100 °C, mesurée comme précédemment, est égale à 2,4 kg.

## Revendications

1. Métal enduit d'une couche d'un film de polymère d'éthylène, d'épaisseur comprise entre 10 et 500 microns, caractérisé en ce que ledit film consiste en un terpolymère ayant un indice de fluidité compris entre 2 et 10 dg/mn et comprenant de 88 à 98,7% en moles de motifs dérivés de l'éthylène, de 1 à 10% en moles de motifs dérivés d'un (méth)acrylate d'alkyle et de 0,3 à 3% en moles de motifs dérivés de l'anhydride maléïque.

2. Métal enduit selon la revendication 1, caractérisé en ce que ledit métal est choisi parmi l'aluminium et l'acier.

3. Métal enduit selon l'une des revendications 1 et 2, caractérisé en ce que l'indice de polydispersité du terpolymère est supérieur à 6.

4. Métal enduit selon l'une des revendications 1 et 2, caractérisé en ce que la température Vicat du terpolymère est comprise entre 30° et 85 °C.

5. Métal enduit selon l'une des revendications 1 à 4, caractérisé en ce que ledit terpolymère comprend en outre jusqu'à 5% en moles de motifs dérivés d'un quatrième monomère choisi parmi les α-oléfines ayant de 3 à 8 atomes de carbone, les mono-maléates d'alkyle et les maléates de dialkyle dont les groupes alkyle ont de 1 à 6 atomes de carbone, l'acétate de vinyle et le monoxyde de carbone.

6. Métal enduit selon l'une des revendications 1 à 5, caractérisé en ce que ledit terpolymère est préalablement traité par une quantité, au plus égale à la quantité molaire de motifs dérivés de l'anhydridre maléique, d'un réactif choisi parmi l'ammoniac et les composés ayant une fonction amine primaire ou secondaire.

7. Métal enduit selon l'une des revendications 1 à 6, caractérisé en ce que ledit métal est sous forme de plaque, feuille ou tube et a une épaisseur d'au moins 25 µm.

8. Métal enduit selon l'une des revendications 1 à 7, caractérisé en ce que ledit film a une épaisseur comprise entre 10 et 500 µm.

9. Procédé d'obtention d'un métal enduit selon la revendication 1, caractérisé en ce qu'il consiste à enduire ledit film de terpolymère sur un support métallique à une température comprise entre 140 °C et 300 °C, la vitesse de défilement dudit support métallique étant comprise entre 40 et 400 mètres par minute.

10. Procédé selon la revendication 9, caractérisé en ce que ledit film de terpolymère est obtenu à travers une filière plate.

## Patentansprüche

1. Metall, das mit einem Äthylenpolymerfilm einer Dicke zwischen 10 und 500 µm beschichtet ist, dadurch gekennzeichnet, dass der genannte Film aus einem Terpolymer besteht, das einen Fliessindex zwischen 2 und 10 dg/min besitzt und 88 bis 98,7 Mol.-% an von Äthylen abgeleiteten Einheiten, 1 bis 10 Mol.-% an von einem Alkyl(meth)acrylat abgeleiteten Einheiten und 0,3 bis 3 Mol.-% an von Maleinsäureanhydrid abgeleiteten Einheiten enthält.

2. Beschichtetes Metall nach Anspruch 1, dadurch gekennzeichnet, dass das genannte Metall ausgewählt ist aus der Gruppe bestehend aus Aluminium und Stahl.

3. Beschichtetes Metall nach Anspruch 1 oder 2, dadurch gekennzeichnet, dass die Polydispersitätszahl des Terpolymers höher als 6 ist.

4. Beschichtetes Metall nach Anspruch 1 oder 2, dadurch gekennzeichnet, dass der Vicatpunkt des Terpolymers zwischen 30° und 85 °C liegt.

5. Beschichtetes Metall nach einem der Ansprüche 1 bis 4, dadurch gekennzeichnet, dass das Terpolymer ausserdem bis zu 5 Mol.-% an von einem vierten Monomer abgeleiteten Einheiten enthält, das ausgewählt ist aus der Gruppe bestehend aus den α-Olefinen mit 3 bis 8 Kohlenstoffatomen, den Alkyl-Monomaleaten und den Dialkylmaleaten, deren Alkylgruppen 1 bis 6 Kohlenstoffatome besitzen, Vinylacetat und Kohlenmonoxid.

6. Beschichtetes Metall nach einem der Ansprüche 1 bis 5, dadurch gekennzeichnet, dass das genannte Terpolymer vorher mit einer Menge, die höchstens gleich ist der Molmenge der von Maleinsäureanhydrid abgeleiteten Einheiten, eines Reaktionsmittels behandelt wird, das ausgewählt ist aus der Gruppe bestehend aus Ammoniak und den eine primäre oder sekundäre Amingruppe besitzenden Verbindungen.

7. Beschichtetes Metall nach einem der Ansprüche 1 bis 6, dadurch gekennzeichnet, dass das genannte Metall in Form einer Platte, einer Folie oder einem Rohr mit einer Dicke von mindestens 25 µm vorliegt.

8. Beschichtetes Metall nach einem der Ansprüche 1 bis 7, dadurch gekennzeichnet, dass der genannte Film eine Dicke zwischen 10 und 500 µm besitzt.

9. Verfahren zur Herstellung eines beschichteten Metalls nach Anspruch 1, dadurch gekennzeichnet, dass es darin besteht, einen metallischen Träger mit dem genannten Terpolymerfilm bei einer Temperatur zwischen 140 °C und 300 °C zu beschichten, wobei die Vorschubgeschwindigkeit des genannten metallischen Trägers zwischen 40 und 400 m/min beträgt.

10. Verfahren nach Anspruch 9, dadurch gekennzeichnet, dass der genannte Terpolymerfilm aus einer Breitschlitzdüse erhalten wird.

## Claims

1. A metal coated with a layer of an ethylene polymer film, of a thickness of between 10 and 500 microns, characterized in that the said film consists of a terpolymer having a fluidity index of between 2 and 10 dg/mn and comprising from 88 to 98,7 mol% of units derived from ethylene, from 1 to 10 mol% of units derived from an alkyl (meth)acrylate and from 0.3 to 3 mol% of units derived from maleic anhydride.

2. A coated metal according to Claim 1, characterized in that the said metal is selected from aluminium and steel.

3. A coated metal according to one of Claims 1 and 2, characterized in that the polydispersity index of the terpolymer is greater than 6.

4. A coated metal according to one of Claims 1 and 2, characterized in that the Vicat temperature of the terpolymer is between 30° and 85 °C.

5. A coated metal according to any one of Claims 1 to 4, characterized in that the said terpolymer further comprises up to 5 mol% of units derived from a fourth monomer selected from the α-olefins having from 3 to 8 carbon atoms, alkyl mono-maleates and dialkyl maleates, the alkyl groups of which have from 1 to 6 carbon atoms, vinyl acetate and carbon monoxide.

6. A coated metal according to any one of Claims 1 to 5, characterized in that the said terpolymer is initially treated by a quantity, at least equal to the molar quantity of units derived from maleic anhydride, of a reactant selected from ammonia and compositions having a primary or secondary amine function.

7. A coated metal according to any one of Claims 1 to 6, characterized in that the said metal is in the form of a plate, foil or tube and has a thickness of at least 25 μm.

8. A coated metal according to any one of Claims 1 to 7, characterized in that the said film has a thickness of between 10 and 500 μm.

9. A method of obtaining a coated metal according to Claim 1, characterized in that it consists in coating the said terpolymer film on a metal base to a temperature of between 140 °C and 300 °C, the unwinding speed of the said metal base being between 40 and 400 metres per minute.

10. A method according to Claim 9, characterized in that the said terpolymer film is obtained through a sheet die.